# EUROPÄISCHE PATENTSCHRIFT

(11) **EP 1 034 108 B1**
(45) Veröffentlichungstag und Bekanntmachung des Hinweises auf die Patenterteilung: **10.10.2001**
(21) Anmeldenummer: 98963494.4
(22) Anmeldetag: 21.11.1998
(51) Int. Cl.: B62D 5/06

(54) **HYDRAULISCHE SERVOLENKUNG**
HYDRAULIC POWER STEERING SYSTEM
DIRECTION ASSISTEE HYDRAULIQUE

(30) Priorität: 05.12.1997 DE 19754011
(43) Veröffentlichungstag der Anmeldung: 13.09.2000
(73) Patentinhaber: DaimlerChrysler AG, 70567 Stuttgart (DE)
(72) Erfinder: ASBRAND, Ulrich, D-71155 Altdorf (DE); CLASS, Jürgen, D-75428 Illingen (DE)
(86) Internationale Anmeldenummer: EP9807510
(87) Internationale Veröffentlichungsnummer: WO9929558

(56) Entgegenhaltungen:
- DE-A- 4 423 658
- US-A- 5 489 006
- PATENT ABSTRACTS OF JAPAN vol. 008, no. 128 (M-302), 14. Juni 1984 -& JP 59 032561 A (KOYO SEIKO KK;OTHERS: 01), 22. Februar 1984

## Beschreibung

Die Erfindung betrifft eine hydraulische Servolenkung mit den Merkmalen des Oberbegriffs des Anspruchs 1.

Aus der DE 44 23 658 A1 ist eine derartige Servolenkung bekannt, deren als hydrostatisches Motoraggregat bzw. als hydraulisches Verdrängeraggregat ausgebildeter Servomotor auch als Lenkungsdämpfer wirkt, in dem an Hydraulikleitungen zwischen Servomotor und einem Servoventil Dämpferventilanordnungen vorgesehen sind. Im Inneren jeder Dämpferventilanordnung ist ein erster Raum, der mit dem Servoventil kommuniziert, von einem zweiten Raum getrennt, der mit dem Servomotor kommuniziert, wobei mindestens ein erster und mindestens ein zweiter Strömungsweg vorgesehen sind, die jeweils den ersten Raum mit dem zweiten Raum verbinden. Außerdem ist ein Schließ- oder Drosselorgan vorgesehen, das mit den Strömungswegen zusammenwirkt, derart, daß das Schließ- oder Drosselorgan den mindestens einen ersten Strömungsweg nach Art eines Rückschlagventils in der einen Richtung sperrt und in der anderen Richtung frei gibt und den mindestens einen zweiten Strömungsweg drosselt.

Heutige Kraftfahrzeuge sind regelmäßig mit einer Servolenkung ausgerüstet, die zumindest im Falle von Personenkraftwagen typischerweise mit hydraulischer Hilfskraft arbeitet. Eine solche Servolenkung bewirkt, daß die vom Fahrer bei Betätigung der Fahrzeuglenkung aufzubringenden Kräfte immer hinreichend gering gehalten werden.

Um im Lenksystem z.B. Schwingungen und Stöße weitestgehend zu vermeiden bzw. zu unterdrücken, besitzen praktisch alle Fahrzeuglenkungen einen Lenkungsdämpfer.

In diesem Zusammenhang ist es aus der DE 40 29 156 A1 bekannt, ein als Servomotor diendendes doppeltwirkendes Kolben-Zylinder-Aggregat auch als Lenkungsdämpfer wirken zu lassen, in dem in den Leitungen zwischen dem Kolben-Zylinder-Aggregat und dem zu dessen Steuerung diendenden Servoventil, über das das Kolben-Zylinder-Aggregat steuerbar mit einer hydraulischen Druckquelle sowie einem relativ drucklosen Hydraulik-Reservoir verbindbar ist, Dämpferventilanordnungen vorgesehen sind. Eine prinzipiell ähnliche Anordnung wird in der DE 41 06 310 A1 beschrieben. Die in diesen beiden Druckschriften vorgesehenen Dämpferventilanordnungen sind vergleichsweise aufwendig.

Nach der DE 43 23 179 C1 ist zur Vereinfachung der Dämpferventilanordnungen vorgesehen, die Dämpferventile an einem lochscheibenartigen Ventilträgerteil auszubilden, dessen vom Hydraulikmedium durchsetzte Löcher mittels stirnseitig am Ventilträgerteil durch Bolzen gehalterter Ventilplättchen und/oder gefederter Ventilplatten steuerbar sind. Dabei bilden die Löcher Kanäle und die Ventilplättchen bzw. die Ventilplatten dienen als Schließ- und Drosselorgane für diese Kanäle, wobei die Schließ- und Drosselorgane mittels Federn jeweils in eine Schließ- bzw. Drossellage vorgespannt sind. Außerdem kann vorgesehen sein, das lochscheibenartige Ventilträgerteil nach Art eines Distanzringes oder einer Distanzscheibe zwischen einer Lagerfläche eines am Gehäuse des Servoventiles oder des Servomotors angeordneten Anschlußstutzens und einer Gegenlagerfläche des mit dem Anschlußstutzen verbindbaren Anschlußteiles der Hydraulikleitung einzuspannen.

Statt dessen ist es auch möglich, das Ventilträgerteil im Anschlußstutzen bzw. im Anschlußteil unverlierbar zu haltern, wie es beispielsweise in der DE 44 23 658 A1 dargestellt ist.

Aus der DE 44 46 123 A1 ist außerdem eine Drosseleinrichtung für eine hydraulische Servolenkung bekannt, die Sensoren aufweist, die mit die aktuelle Fahrsituation kennzeichnenden Parametern korrelierte Signale generieren, und eine elektrische und/oder elektronische Steuereinrichtung aufweist, die in Abhängigkeit der Signale dieser Sensoren einen Magnetschalter eines Drosselventils steuert.

Die vorliegende Erfindung beschäftigt sich mit dem Problem, eine Servolenkung der eingangs angegebenen Art noch weiter zu verbessern und insbesondere das Betriebsverhalten an unterschiedliche Außeneinflüsse anzupassen.

Dieses Problem wird erfindungsgemäß dadurch gelöst, daß bei einer Servolenkung der eingangs angegebenen Art die. Dämpferventilanordnungen jeweils zumindest einen Kanal mit einem Schließ- oder Drosselorgan aufweisen, welches von einer Federanordnung mit Federkraft in seine Schließ- bzw. Drossellage gespannt wird, und daß ein Magnet vorgesehen ist, der elektrisch schaltbar entgegen der Federkraft mit dem Schließoder Drosselorgan zusammenwirkt.

Die Erfindung beruht auf dem allgemeinen Gedanken, den Drosselwiderstand und damit die Dämpferwirkung der Dämpferventilanordnung in Abhängigkeit von Parametern zu steuern, die auf ein Fahrzeug einwirken, das mit der erfindungsgemäßen Servolenkung ausgestattet ist. Derartige Parameter können beispielsweise sein: Fahrgeschwindigkeit, Querbeschleunigung des Fahrzeuges, Lenkwinkel, Lenkgeschwindigkeit, Durchflußmenge an Hydraulikmedium durch die Dämpferventilanordnungen, Außentemperatur, Hydraulikmediumtemperatur. Um die jeweiligen Parameter detektieren zu können, sind entsprechende Sensoren vorgesehen, die mit einer den Elektromagneten steuernden Steuereinrichtung verbunden sind.

Beispielsweise ist es von großer Bedeutung, die Dämpferwirkung der Dämpferventilanordnung temperaturabhängig zu steuern, um eine Anpassung an die temperaturabhängige Viskosität des Hydraulikmediums zu erreichen. Bei sehr niedriger Temperatur wird das Hydraulikmedium deutlich zähflüssiger, mit der Folge, daß das Hydraulikmedium weniger leicht durch die Dämpferventilanordnungen hindurchströmen kann. Dieser Effekt wird nun erfindungsgemäß dadurch weitestgehend kompensiert, daß bei niedriger Temperatur über eine entsprechende Ansteuerung des Elektromagneten eine Entdrosselung der jeweiligen Dämpferventilanordnung erfolgt.

Darüber hinaus kann es beispielsweise sinnvoll sein, die Dämpfungswirkung bei niedriger Fahrgeschwindigkeit zu verringern, um so die für die Lenkunterstützung zur Verfügung stehende Kraft des Servomotors durch Entdrosselung der Dämpferventilanordnung zu erhöhen. Somit kann die Lenkung zum Beispiel beim Rangieren oder Wenden des Fahrzeuges leichtgängiger arbeiten und daher komfortabler bedienbar sein als bei normaler Geradeausfahrt.

Bei einer bevorzugten Ausführungsform der erfindungsgemäßen Servolenkung kann der elektrisch schaltbare Magnet ringförmig ausgebildet und koaxial zu einem Bolzen angeordnet sein, an dem ein als Ringscheibe ausgebildetes Schließ- oder Drosselorgan,das nach Art eines Rückschlagventils arbeitet, axial verstellbar angeordnet ist, wobei der Elektromagnet zur Verstellung der Ringscheibe entgegen der Rückschlagrichtung mit der Ringscheibe zusammenwirkt. Diese Ausführungsform ermöglicht eine besonders einfache Ausgestaltung der Dämpferventilanordnung bzw. der Servolenkung, deren Dämpfungswirkung besonders einfach über eine elektrische Steuereinrichtung beeinflußt werden kann. Außerdem können insbesondere Zwischenstellungen für die Ringscheibe eingestellt werden, bei der das ringscheibenförmig ausgebildete Schließ- bzw. Drosselorgan auch bei einer aktivierten Entdämpfung durch den Elektromagneten noch als Rückschlagventil arbeiten kann.

Bei einer anderen besonders zweckmäßigen Ausgestaltung der erfindungsgemäßen Servolenkung kann das vom Elektromagneten angezogene, als Ringscheibe ausgebildete Schließ- oder Drosselorgan beim Erreichen einer maximalen Öffnungslage an einem axialen, stirnseitigen Ende des Magneten zur Anlage kommen, wobei sich ein Ringraum ausbildet, der durch den Magneten, den Bolzen und die Ringscheibe abgeschlossen ist. Diese Maßnahme bewirkt, daß die Öffnungsbewegung der als Rückschlagventil arbeitenden Ringscheibe entgegen einer durch das von der Ringscheibe zu verdrängende Hydraulikfluid ausgeübten Widerstandskraft erfolgen muß, wobei der Strömungsquerschnitt zwischen der Stirnseite des Magneten und der dieser zugewandten Seite der Ringscheibe mit abnehmendem Abstand verkleinert wird, so daß der der Öffnungsbewegung der Ringscheibe entgegengebrachte Strömungswiderstand ständig zunimmt. Auf diese Weise erfolgt die durch den aktivierten Magneten bewirkte Öffnungsbewegung der Ringscheibe gedämpft. Eine derartige Dämpfung reduziert den Verschleiß der gegeneinander bewegten Bauteile und gewährleistet eine hohe Lebensdauer. In umgekehrter Richtung, wenn sich die Ringscheibe in ihrer Rückschlagrichtung bewegt, hat diese bevorzugte Ausgestaltung zur Folge, daß auch diese Bewegung nur gedämpft erfolgen kann, jedoch ist in diesem Fall die Dämpfung bei Beginn der Bewegung stärker als bei deren Ende.

Bei einer besonders zweckmäßigen Ausgestaltung der Servolenkung kann die Federanordnung eine Schraubendruckfeder aufweisen, die zwischen dem Bolzen oder dem Magneten und der Ringscheibe angeordnet ist und die Ringscheibe in deren Rückschlagrichtung vorspannt, wodurch die erfindungsgemäße Dämpferventilanordnung besonders raumsparend ausgebildet werden kann.

Entsprechend einer anderen Ausführungsform der erfindungsgemäßen Servolenkung kann der Elektromagnet konzentrisch an einem Tragteil im Inneren der Dämpferventilanordnung angebracht sein, wobei der Elektromagnet einen das Tragteil und den Elektromagneten koaxial mit Spiel durchdringenden Stößel, z.B. über eine Tellerscheibe, antreibt, an dem eine Ringscheibe befestigt ist, die als Schließ- oder Drosselorgan dient und nach Art eines Rückschlagventils arbeitet. Ein auf diese Weise ausgebildeter Antrieb für die Ringscheibe kann ein sicheres Funktionieren der Ringscheibe als Schließ- oder Drosselorgan gewährleisten, selbst wenn bei der Herstellung der den Stößel enthaltenden Baugruppe relativ grobe Toleranzen vorgesehen werden, da durch die Führung des Stößels eine Zentrierung der Ringscheibe erfolgt.

Bei einer bevorzugten Ausführungsform kann die Federanordnung der Dämpferventilanordnung derart ausgebildet sein, daß sie das Schließ- oder Drosselorgan mit temperaturabhängiger Federkraft in seine Schließ- bzw. Drossellage spannt, wobei ei-ne sinkende Temperatur eine Abnahme der Federkraft zur Folge hat. Diese Maßnahme ermöglicht eine gleichmäßigere Anpassung der Dämpfungswirkung an die vorliegenden Viskositätswerte des Hydraulikmediums. In diesem Fall kann die elektromagnetische Verstellung der Dämpfungswirkung die temperaturabhängige Verstellung über die Federkraft unterstützen, jedoch kann die elektromagnetische Dämpferbeeinflussung außerdem anhand anderer Parameter arbeiten, wie z.B. der Fahrgeschwindigkeit (siehe oben).

Die temperaturabhängig arbeitenden Federanordnungen können Federn aus einer Formgedächtnis-Legierung und/oder Bimetallfedern aufweisen. Bei den Federn aus Formgedächtnis-Legierung ändert sich das Federverhalten sprunghaft, wenn ein schmaler Sprungtemperaturbereich über- bzw. unterschritten wird. Im Unterschied dazu können Bimetallfedern ihr Verhalten in einem großen Temperaturbereich vergleichsweise "schleichend" ändern bzw. bei einem Temperaturschwellwert "umschnappen". Durch entsprechende Auswahl bzw. Kombination der Federelemente kann eine optimale Anpassung an die temperaturbedingten Viskositätsänderungen des Hydraulikmediums erreicht werden.

Wenn die erfindungsgemäße Servolenkung mit einem temperaturabhängig angesteuerten Elektromagneten ausgestattet ist bzw. wenn die Federanordnung der Dämpferventilanordnung eine temperaturabhängige Federkraft erzeugt, hat die Erfindung insbesondere in sehr kalten Klimazonen eine hohe Bedeutung. Beispielsweise bei längerer Geradeausfahrt des Fahrzeuges erfolgt am Servomotor keinerlei Zu- oder Abfluß von Hydraulikmedium. Da der Servomotor dem Fahrtwind und/oder Spritzwasser ausgesetzt ist, bleibt dann das Hydraulikmedium sehr kalt und somit zähflüssig, mit der Folge, daß jede Hydraulikströmung nur gegen einen deutlich erhöhten Strömungswiderstand erfolgen und die Lenkung schwergängig und die Dämpfung zu stark werden kann. Diese negativen Effekte können durch die Erfindung vermieden werden.

Im übrigen wird hinsichtlich bevorzugter Merkmale der Erfindung auf die Ansprüche sowie die nachfolgende Erläuterung einer vorteilhaften Ausführungsform verwiesen, die anhand der Zeichnungen beschrieben wird.

Es zeigen, jeweils schematisch
- Fig. 1: eine schaltplanartig schematisierte Darstellung einer hydraulischen Servolenkung mit Dämpferventilen am Servomotor,
- Fig. 2: ein Schnittbild einer bevorzugten Ausführungsform eines Dämpferventiles und
- Fig. 3: eine Schnittansicht wie in Fig. 2, jedoch einer anderen vorteilhaften Ausführungsform eines Dämpferventiles.

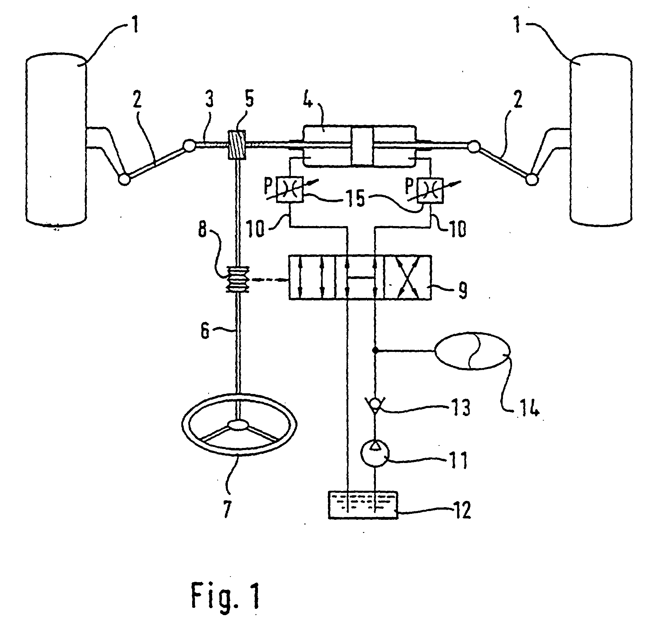

Entsprechend Fig. 1 besitzt ein im übrigen nicht dargestelltes Kraftfahrzeug vordere Fahrzeuglenkräder 1, die im dargestellten Beispiel über Spurstangen 2 mit einer Zahnstange 3 verbunden sind, welche gleichachsig in die Kolbenstange eines als Servomotor angeordneten doppeltwirkenden Kolben-Zylinder-Aggregates 4 übergeht bzw. mit dieser Kolbenstange verbunden ist.

Die Zahnstange 3 kämmt über ein Ritzel 5, das über eine Lenksäule 6 mit einem Lenkhandrad 7 antriebsmäßig verbunden ist. In der Lenksäule 6 ist ein drehelastisches Element 8 angeordnet, so daß zwischen Ritzel 5 und Lenkhandrad 7 eine begrenzte Relativdrehung auftreten kann, deren Maß von den zwischen Ritzel 5 und Lenkhandrad 7 übertragenen Kräften und Momenten abhängig ist.

Diese Relativdrehung steuert ein Servoventil 9, das einerseits über Motorleitungen 10 mit den beiden Kammern des Kolben-Zylinder-Aggregates 4 und andererseits mit der Druckseite einer Hydraulikpumpe 11 sowie einem relativ drucklosen Hydraulikreservoir 12 verbunden ist, an das die Saugseite der Pumpe 11 angeschlossen ist.

In der dargestellten Mittellage des Servoventiles sind die beiden Kammern des Kolben-Zylinder-Aggregates 4 miteinander sowie mit dem Reservoir 12 verbunden. Außerdem kann eine Verbindung zur Druckseite der Pumpe 11 bestehen, welche dann ständig laufen kann.

Statt dessen ist es auch möglich, daß in der Mittelstellung des Servoventiles 9 der Ventilanschluß zur Druckseite der Pumpe 11 abgesperrt ist, die in diesem Falle über ein Rückschlagventil 13 einen Druckspeicher 14 laden kann und in Abhängigkeit vom Ladedruck gesteuert bzw. bei hohem Ladedruck ausgeschaltet wird.

Sobald zwischen Ritzel 5 und Lenkhandrad 7 Kräfte bzw. Drehmomente wirksam sind, wird das Servoventil 9 in der einen oder anderen Richtung aus seiner Mittellage verschoben, mit der Folge, daß zwischen den Motorleitungen 10 eine mehr oder weniger große Druckdifferenz in der einen oder anderen Richtung und damit eine mehr oder weniger große Servokraft des Kolben-Zylinder-Aggregates 4 in der einen oder anderen Richtung erzeugt und die jeweils am Lenkhandrad 7 für ein Lenkmanöver aufzubringende Kraft entsprechend vermindert wird.

Bei der erfindungsgemäßen Lenkung übernimmt das als Servomotor dienende Kolben-Zylinder-Aggregat 4 auch die Funktion eines Lenkungsdämpfers zur Dämpfung schneller Lenkwinkeländerungen der Fahrzeuglenkräder 1. Zu diesem Zweck sind an den Anschlüssen der Leitungen 10 am Kolben-Zylinder-Aggregat 4 jeweils Dämpferventile 15 angeordnet, die in weiter unten dargestellter Weise parameterabhängig arbeiten. In Fig. 1 sind die Dämpferventile 15 als durch einen Parameter P steuerbare Drosseln dargestellt. Aufgrund des Drosselwiderstandes der Dämpferventile 15 werden schnelle Bewegungen des Kolbens des Kolben-Zylinder-Aggregates 4 und dementsprechend schnelle Lenkverstellungen der Fahrzeuglenkräder 1 gedämpft.

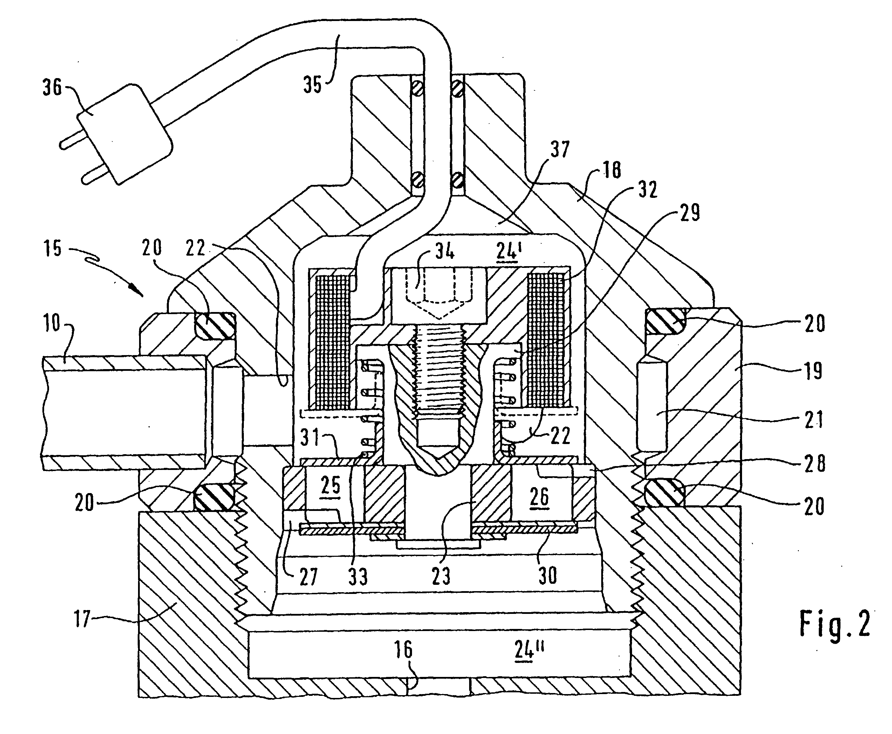

Fig. 2 zeigt eine bevorzugte Ausführungsform einer Dämpferventilanordnung 15 der erfindungsgemäßen Servolenkung.

Am Kolben-Zylinder-Aggregat 4 ist jede Kammer mit einer Anschlußöffnung 16 versehen, die innerhalb eines Innengewindeteiles 17, koaxial zur Gewindeachse, angeordnet ist. In das Innengewindeteil 17 läßt sich ein hutförmiges Anschlußteil 18 mit einem an ihm angeordneten Außengewinde eindrehen, wobei zwischen einander gegenüberliegenden Flanschflächen am Innengewindeteil 17 einerseits und am Anschlußteil 18 andererseits ein mit der Motorleitung 10 fest verbundener Haltering 19 axial einspannbar ist und die Spalte zwischen den Stirnseiten des Halteringes 19 und den zugewandten Flanschflächen des Innengewindeteiles 17 und des Anschlußteiles 18 durch Dichtringe 20 am Haltering 19 druckfest abgesperrt werden.

Der Haltering 19 besitzt auf seinem Innenumfang einen nach Art einer Ringnut ausgebildeten Kanal 21, der einerseits mit der Motorleitung 10 und andererseits mit einer oder mehreren Radialbohrungen 22 im Anschlußteil 18 kommuniziert und damit eine Verbindung zwischen der Motorleitung und dem Innenraum des Anschlußteiles 18 herstellt.

Innerhalb des Anschlußteiles 18 ist ein kreisscheibenförmiges Trägerteil 23 fest und unverlierbar gehaltert, das innerhalb des Anschlußteiles 18 einen an die Radialbohrung bzw. Radialbohrungen 22 anschließenden Raum 24' von einem an die Anschlußöffnung 16 anschließenden Raum 24" abtrennt.

Das Trägerteil 23 besitzt Axialbohrungen 25 und 26, wobei die Axialbohrungen 25 in eine zum Raum 24" geöffnete Vertiefung 27 auf der in Fig. 2 unteren Stirnseite des scheibenförmigen Trägerteiles 23 und die Axialbohrungen 26 in eine ähnliche Vertiefung 28 auf der in Fig. 2 oberen Stirnseite des Trägerteiles 23 münden.

In einer koaxial angeordneten Zentralöffnung des Trägerteiles 23 ist ein Bolzen 29 gehaltert, der auf einer Stirnseite des Trägerteiles 23 - im Beispiel der Fig. 2 auf der der Anschlußöffnung 16 zugewandten Stirnseite - kreisscheibenförmige Federplatten 30 haltert und auf der anderen Stirnseite des Trägerteiles 23 als Axialführung für eine Ringscheibe 31 ausgebildet ist.

Die Federplatten 30 sind so bemessen, daß sie die Axialbohrungen 26 im Trägerteil 23 zumindest weitestgehend überdecken und größere Bereiche der den Axialbohrungen 25 zugeordneten Vertiefungen 27 frei lassen. Die Ringscheibe 31 ist so bemessen, daß sie die Axialbohrungen 25 zu überdecken vermag und die den Axialbohrungen 26 zugeordneten Vertiefungen 28 zumindest bereichsweise frei läßt.

Zwischen der Ringscheibe 31 und der dieser zugewandten Stirnseite eines am freien Ende des Bolzens 29 angeordneten radial abstehenden Flansches ist eine Schraubendruckfeder 33 eingespannt.

Bei normalen Betriebstemperaturen besitzt die Schraubendruckfeder 33 eine Spannung, so daß die Schraubendruckfeder 33 die Ringscheibe 31 nach Art eines Rückschlagventiles gegen das Trägerteil 23 drängen kann.

Die Schraubendruckfeder 33 besteht in einem bevorzugten Ausführungsbeispiel aus einer Formgedächtnis-Legierung (Memory-Metall), die ihre Federeigenschaften bei einer relativ niedrigen Sprungtemperatur deutlich ändert, derart, daß bei Unterschreitung der Sprungtemperatur nur noch eine leicht überwindbare Federspannung verbleibt oder daß die Schraubendruckfeder 33 durch den Temperatursprung soweit verkürzt wird, daß sie bereits als Zugfeder wirkt und die Ringscheibe 31 ständig in einer von dem Trägerteil 23 abgehobenen Lage zu halten vermag. Im letzteren Fall ist die Schrauben(druck)feder 33 auf geeignete Weise am Flansch des Bolzens 29 und an der Ringscheibe 31 befestigt.

Im Unterschied zur bevorzugten Ausgestaltung mit einer Schraubendruckfeder 33 aus Memory-Metall ist auch eine Ausführungsform möglich, bei der die Schraubendruckfeder 33 als Bimetall-Feder ausgebildet ist, deren Druckkraft von der Temperatur abhängt.

Die Federplatten 30 können aus normalem Federstahl od.dgl. bestehen. Es ist jedoch auch möglich, die in Fig. 2 unterste Federplatte 30 oder mehrere der unteren Federplatten 30 oder alle Federplatten 30 aus einer Formgedächtnis-Legierung herzustellen, derart, daß die Federrate der Federplatten 30 und damit deren Steifigkeit bei Unterschreitung einer Sprungtemperatur deutlich abnehmen.

Alternativ besteht auch die Möglichkeit, zwei Federplatten 30 aus unterschiedlichen Materialien, die sich in ihrem Ausdehnungsverhalten bei Temperaturänderungen unterscheiden, nach Art einer Bimetallfeder zu kombinieren, derart, daß eine Bimetall-Federplatte gebildet wird, die sich mit ihrem Außenumfang bei absinkenden Temperaturen zunehmend von der zugewandten Stirnseite des Trägerteiles 23 abhebt.

Die Federplatten 30 sowie die Ringscheibe 31 wirken mit den Axialbohrungen 25 und 26 und den Vertiefungen 27 und 28 als Drosseln zusammen.

Bei normalen Betriebstemperaturen werden die Ringscheibe 31 durch die Spiraldruckfeder 33 und die Federplatten 30 aufgrund ihrer Federelastizität elastisch gegen die jeweils zugewandte Stirnseite des Trägerteiles 23 vorgespannt. Im Falle einer hydraulischen Strömung vom Raum 24' zum Raum 24" muß dann das Hydraulikmedium durch einen geringen Freiraum am Außenrand der Ringscheibe 31 vorbei durch die Vertiefungen 28 und die Axialbohrungen 26 hindurchströmen und die Federplatten 30 von der Unterseite des Trägerteiles 23 abheben. Dadurch wird insgesamt ein relativ hoher Drosselwiderstand erreicht, der zu einer entsprechenden Dämpfung der Hydraulikströmung sowie der bei dieser Strömung auftretenden Bewegung des Kolbens des Kolben-Zylinder-Aggregates 4 (vgl. Fig. 1) führt. Bei umgekehrter Strömungsrichtung, das heißt von einer Strömung vom Raum 24" zum Raum 24', muß das Hydraulikmedium am Außenrand der Federplatten 30 vorbei durch die Vertiefungen 27 sowie die Axialbohrungen 25 hindurchströmen und dabei die Ringscheibe 31 gegen die Kraft der Schraubendruckfeder 33 anheben. Da diese Schraubendruckfeder 33 üblicherweise mit einer relativ niedrigen Vorspannung ausgebildet ist, tritt hierbei nur eine dementsprechend geringe Drosselung der Strömung auf.

Bei Unterschreitung der Sprungtemperatur der Schraubendruckfeder 33 kann die Ringscheibe 31 leicht vom Trägerteil 23 abheben, wobei dann der Strömungswiderstand in Richtung des Raumes 24" stark vermindert wird, da auch in dieser Strömungsrichtung nunmehr die Axialbohrungen 25 geöffnet sind.

Soweit die Federplatten 30 ganz oder teilweise aus Formgedächtnis-Legierung bestehen, nimmt deren Steifigkeit bei Unterschreitung ihrer Sprungtemperatur deutlich ab, so daß bei einer Strömung vom Raum 24' zum Raum 24" von den Federplatten 30 nur ein deutlich verminderter Drosselwiderstand bewirkt werden kann.

Falls die Federplatten 30 als Bimetall-Platte(n) ausgebildet sind, ist eine Anordnung möglich, bei der sich die Federplatten 30 bei tiefer werdender Temperatur vollständig vom Trägerteil 23 abheben, mit der Folge, daß der durch die Federplatten 30 bewirkte Drosselwiderstand bei beiden Strömungsrichtungen abnimmt.

Federelemente aus Formgedächtnis-Legierung besitzen ein "Schaltverhalten", d.h. wird die Sprungtemperatur über- oder unterschritten, so verändert sich der Zustand des Federelementes von "weich" nach "hart" bzw. umgekehrt. Im übrigen können Temperatureinflüsse weitestgehend vernachlässigt werden. Dies ist gleichbedeutend damit, daß die Schraubendruckfeder 33 aus Formgedächtnis-Legierung die Ringscheibe 31 oberhalb der Sprungtemperatur drosselwirksam "schaltet" und unterhalb der Sprungtemperatur drosselunwirksam macht. Damit wird der von der Ringscheibe 31 bewirkte Drosselwiderstand "schlagartig" zwischen stark und schwach umgeschaltet.

Im Unterschied dazu können Bimetall-Elemente ihre Form in einem weiten Temperaturbereich verändern, d.h. der hiervon gesteuerte Drosselwiderstand verändert sich in einem weiten Temperaturbereich.

Auf das entsprechend Fig. 2 obere, axial freie Ende des Bolzens 29 bzw. auf dessen Flansch ist ein Elektromagnet 32 übergestülpt und entsprechend dem Ausführungsbeispiel mit Hilfe einer Innensechskantschraube 34 am Bolzen 29 befestigt. Der Elektromagnet 32 ist - in Fig. 2 durch einen Stecker 36 symbolisiert - über eine Stromzuführungsleitung 35 mit einem nicht dargestellten Steuergerät verbunden. Die Stromzuführungsleitung 35 wird entsprechend dem Ausführungsbeispiel durch eine Öffnung 37 im oberen Bereich des Anschlußteiles 18 abgedichtet aus dem Raum 24' bzw. aus dem Dämpferventil 15 herausgeführt.

Wird der Elektromagnet 32 durch das Steuergerät mit Schaltstrom beaufschlagt, wird die aus einem entsprechenden Material bestehende Ringscheibe 31 vom Elektromagneten 32 angezogen, wobei sie sich entlang des Bolzens 29 axial verstellt. Dabei werden die Axialbohrungen 25 vollständig für eine Durchströmung von Raum 24' nach Raum 24" geöffnet, wodurch sich der Strömungswiderstand in dieser Strömungsrichtung stark vermindert.

Üblicherweise wird die Ringscheibe 31 durch den Magneten 32 soweit angezogen, daß sie entsprechend der in Fig. 2 gestrichelt wiedergegebenen Position an der ihr zugewandten Stirnseite des Elektromagneten 32 zur Anlage kommt. Bei einer anderen Anwendungsform kann jedoch vorgesehen sein, den Schaltstrom in Abstimmung mit der Druckkraft der Schraubendruckfeder 33 so zu wählen, daß auch eine Zwischenstellung der Ringscheibe 31 eingestellt werden kann. Auf diese Weise kann die Durchströmungsmenge zusätzlich beeinflußt werden. Eine derartige Ausgestaltung kann bei relativ geringen Strömungsgeschwindigkeiten von Raum 24' nach Raum 24" eine nahezu dämpfungsfreie Durchströmung der Durchgangsöffnungen 25 gewährleisten, wodurch sich eine relativ große Lenkkraftunterstützung ergibt. Gleichzeitig bewirkt eine relativ hohe Strömungsgeschwindigkeit in der gleichen Richtung eine Mitnahmebewegung der Ringscheibe 31, so daß diese erneut am Trägerteil 23 zur Anlage kommt und nur noch der durch die Federplatten 30 gedämpfte Strömungsweg durch die Durchgangsöffnungen 26 zur Verfügung steht. Während die relativ langsamen Strömungsgeschwindigkeiten den gewollten Lenkbewegungen des Fahrers zugeordnet werden können, treten die relativ hohen Strömungsgeschwindigkeiten ausschließlich durch von außen auf die gelenkten Fahrzeugräder einwirkende Kräfte bzw. Stöße auf, so daß die erfindungsgemäße Dämpferventilanordnung 15 auch bei geöffneter Bypass-Strömung durch die Durchlaßöffnungen 25 in Richtung auf den Raum 24" nahezu ohne zeitliche Verzögerung selbsttätig im Falle eines Stoßes auf maximale Dämpfung umschaltet.

Bei einer Strombeaufschlagung des Elektromagneten 32 bewegt sich die Ringscheibe 31 in Richtung auf den Elektromagneten 32. Dabei erfolgt diese Verstellung der Ringscheibe 31 einerseits entgegen der Federkraft der Druckfeder 33 und andererseits entgegen einer hydraulischen Dämpfungskraft des durch die Ringscheibe 31 verdrängten Hydraulikmediums. Da der radial innen liegende hülsenförmige Abschnitt der Ringscheibe 31 mit relativ geringem Spiel entlang der Außenseite des Bolzens 29 entlanggleitet, wird das zwischen Elektromagnet 32 und Ringscheibe 31 vorhandene Hydraulikmedium im wesentlichen durch einen radial verlaufenden, während der Annäherung der Ringscheibe 31 an den Magneten 32 enger werdenden Spalt verdrängt. Mit abnehmendem Durchströmungsquerschnitt in diesem Radialspalt wird der der Axialbewegung der Ringscheibe 31 entgegengebrachte Widerstand durch die Verdrängung des Hydraulikmediums ständig vergrößert, so daß diese Bewegung mit zunehmender Stärke gedämpft wird. Dabei wird ein durch Bolzen 29, Ringscheibe 31 und Magnet 32 begrenzter Ringraum ausgebildet, der die Schraubendruckfeder 33 enthält.

Beim Ausschalten des Magneten 32 drängt die Schraubendruckfeder 33 die Ringscheibe 31 zum Trägerteil 23 hin. Dabei beginnt diese Rückschlagbewegung der Ringscheibe 31 mit starker Dämpfung, da Hydraulikmedium am Anfang der Rückschlagbewegung nur durch einen kleinen radial verlaufenden Strömungsquerschnitt zwischen Ringscheibe 31 und Magnet 32 in den im übrigen abgedichteten Ringraum einströmen kann.

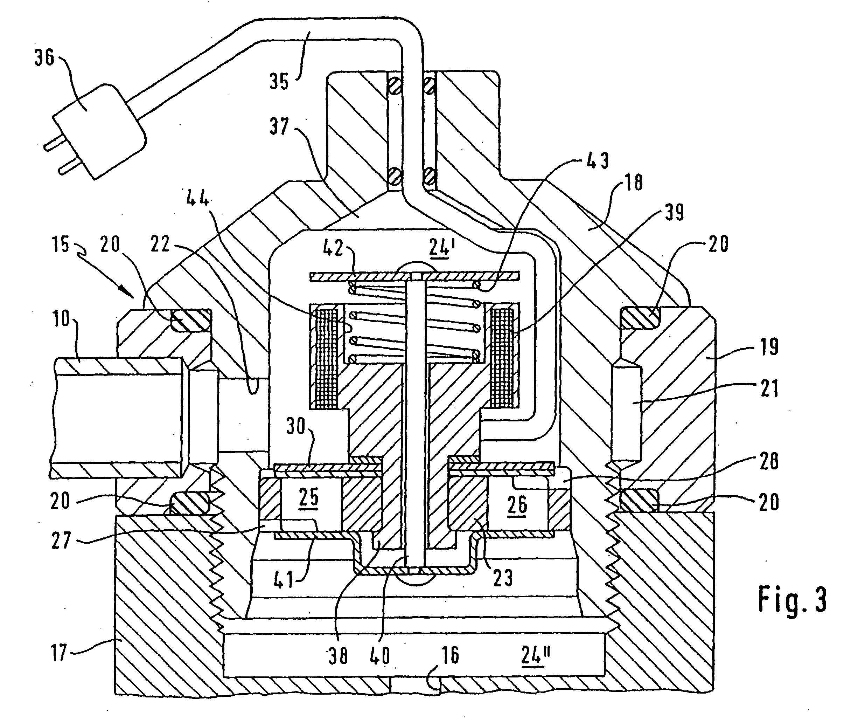

Bei einer anderen Ausführungsform eines Dämpferventils 15 nach der Erfindung ist entsprechend Fig. 3 in der koaxial angeordneten Zentralöffnung des Trägerteiles 23 ein Bolzen 38 gehaltert, der auf der dem Raum 24' zugewandten Seite des Trägerteiles 23 mit einem koaxial dazu angeordneten Elektromagneten 39 verbunden ist. Dabei sind zwischen dem Elektromagneten 39 und der diesem zugewandten Stirnseite des Trägerteiles 23 die Federplatten 30 gehaltert.

Koaxial zum Trägerteil 23 und zum Elektromagneten 39 ist ein diese Bauteile mit Spiel durchdringender Stößel 40 angeordnet, der einenends im Raum 24" eine Ringscheibe 41 und anderenends im Raum 24' eine Tellerscheibe 42, z.B. durch preiswerte Nietverbindungen, haltert. Die Ringscheibe 41 ist - wie die Ringscheibe 31 in Fig. 2 - so bemessen, daß sie die Axialbohrungen 26 zu überdecken vermag und die den Axialbohrungen 25 zugeordneten Vertiefungen 27 zumindest bereichsweise frei läßt.

Zwischen der Tellerscheibe 42 und dem Elektromagneten 39 ist eine Schraubendruckfeder 43 koaxial zum Stößel 40 angeordnet, welche die Tellerscheibe 42 und somit den Stößel 40 in Längsrichtung des Stößels 40 vom Elektromagenten 39 abstoßend vorspannt mit der Folge, daß die Ringscheibe 41 auf der der Anschlußöffnung 16 bzw. dem Raum 24" zugewandten Stirnseite des Trägerteiles 23 zur Anlage kommt.

Zur Aufnahme der Schraubendruckfeder 43 ist im Elektromagneten 39, koaxial zu dessen Längsachse eine vorzugsweise zylindrisch ausgebildete Ausnehmung 44 vorgesehen. Da die Tellerscheibe 42 in radialer Richtung derart bemessen ist, daß sie die Ausnehmung 44 vollständig überdeckend an der dem Trägerteil 23 abgewandten Stirnseite des Elektromagneten 39 zur Anlage kommt, können die Verstellbewegungen des Stößels 40 zumindest in deren Anfangs- bzw. Endphasen gedämpft erfolgen. Wird beispielsweise zum Abheben der Ringscheibe 41 von dem Trägerteil 23 der Elektromagnet 39 aktiviert, wird die Tellerscheibe 42 entgegen der Druckkraft der Schraubendruckfeder 43 in Richtung auf den Elektromagneten 39 von diesem angezogen. Dabei muß das zwischen Elektromagnet 39 und Tellerscheibe 42 vorhandene Hydraulikmedium verdrängt werden, was im wesentlichen durch den zwischen Tellerscheibe 42 und Elektromagnet 39 ausgebildeten Ringspalt erfolgen kann. Während der Verstellbewegung wird der Durchströmungsquerschnitt dieses Ringspaltes jedoch immer kleiner, so daß der Strömungswiderstand ständig ansteigt und sich somit die Hydraulikmittelverdrängung erschwert, mit der Folge, daß die Verstellbewegung des Stößels 40 gedämpft abläuft. Dabei nimmt mit zunehmender Verstellung gleichzeitig die Dämpfungswirkung zu.

Obwohl in den dargestellten Ausführungsbeispielen das Dämpferventil 15 entsprechend den Fig. 2 und 3 derart in die Servolenkung des Fahrzeuges integriert ist, daß der Raum 24' über die Radialbohrungen 22 an die Hydraulikpumpe 11 (vgl. Fig. 1) und der Raum 24" über die Anschlußöffnung 16 an den Servomotor (das Kolben-Zylinder-Aggregat 4 in Fig. 1) angeschlossen ist, kann bei einer anderen Ausgestaltung auch vorgesehen sein, den Raum 24' an den Servomotor 4 und den Raum 24" an die Hydraulikpumpe 11 anzuschließen.

## Patentansprüche

1. Hydraulische Servolenkung, deren als hydrostatisches Motoraggregat bzw. als hydraulisches Verdrängeraggregat ausgebildeter Servomotor (4) auch als Lenkungsdämpfer wirkt, in dem an Hydraulikleitungen (10) zwischen dem Servomotor (4) und einem Servoventil (9) Dämpferventilanordnungen (15) vorgesehen sind,
wobei im Inneren jeder Dämpferventilanordnung (15) ein erster Raum (24'), der mit dem Servoventil (9) kommuniziert, von einem zweiten Raum (24") getrennt ist, der mit dem Servomotor (4) kommuniziert,
wobei mindestens ein erster und mindestens ein zweiter Strömungsweg (25,26) vorgesehen sind, die jeweils den ersten Raum (24') mit dem zweiten Raum (24'') verbinden,
wobei ein Schließ- oder Drosselorgan (31;41) vorgesehen ist, das mit den Strömungswegen (25,26) zusammenwirkt, derart, daß das Schließ- oder Drosselorgan (31;41) den mindestens einen ersten Strömungsweg (25) nach Art eines Rückschlagventils in der einen Richtung sperrt und in der anderen Richtung freigibt und den mindestens einen zweiten Strömungsweg (26 drosselt,
wobei das Schließ- oder Drosselorgan (31;41) von einer Federanordnung (33;43) mit Federkraft in eine Schließ- bzw. Drossellage gespannt wird,
**dadurch gekennzeichnet,**
**daß** ein Magnet (32;39) vorgesehen ist, der elektrisch schaltbar entgegen der Federkraft mit dem Schließ- oder Drosselorgan (31;41) zusammenwirkt.

2. Servolenkung nach Anspruch 1,
**dadurch gekennzeichnet,**
**daß** der Magnet (32) ringförmig ausgebildet und koaxial zu einem Bolzen (29) angeordnet ist, an dem als Schließ- oder Drosselorgan eine nach Art eines Rückschlagventils arbeitende Ringscheibe (31) axial verstellbar angeordnet ist, wobei der Magnet (32) zur Verstellung der Ringscheibe (31) entgegen der Rückschlagrichtung mit dieser zusammenwirkt.

3. Servolenkung nach Anspruch 2,
**dadurch gekennzeichnet,**
**daß** die vom Magneten (32) angezogene Ringscheibe (31) beim Erreichen einer maximalen Öffnungslage an einem axialen Ende des Magneten (32) zur Anlage kommt, wobei sich ein durch Magnet (32), Bolzen (29) und Ringscheibe (31) abgeschlossener Ringraum ausbildet.

4. Servolenkung nach einem der Ansprüche 2 oder 3,
**dadurch gekennzeichnet,**
**daß** die Federanordnung eine Schraubendruckfeder (33) aufweist, die zwischen Bolzen (29) oder Magnet (32) und Ringscheibe (31) angeordnet ist und die Ringscheibe (31) in Rückschlagrichtung vorspannt.

5. Servolenkung nach Anspruch 1,
**dadurch gekennzeichnet,**
**daß** der Magnet (39) ringförmig ausgebildet und koaxial zu einem die Kanäle (25,26) enthaltenden Trägerteil (23) im Inneren der Dämpferventilanordnung (15) angeordnet ist, wobei der Magnet (39) über einen Stößel (40) mit einer als Schließoder Drosselorgan dienenden, nach Art eines Rückschlagventils arbeitenden Ringscheibe (41) zu deren Verstellung entgegen der Rückschlagrichtung zusammenwirkt.

6. Servolenkung nach Anspruch 5,
**dadurch gekennzeichnet,**
**daß** die Federanordnung eine Schraubendruckfeder (43) aufweist, die zwischen einer am Stößel (40) angebrachten Tellerscheibe (42) und dem Magnet (39) angeordnet ist und den Stößel (40) in Richtung einer Vorspannung der Ringscheibe (41) in deren Rückschlagrichtung antreibt.

7. Servolenkung nach Anspruch 6,
**dadurch gekennzeichnet,**
**daß** der Stößel (40) den Magneten (39) und das Trägerteil (23) koaxial mit Radialspiel durchdringt,
**daß** die Ringscheibe (41) an einem Ende des Stößels (40) befestigt ist und sich in ihrer Rückschlagstellung am Trägerteil (23) abstützt und
**daß** die Tellerscheibe (42) am anderen Ende des Stößels (40) befestigt ist und sich bei maximal vom Trägerteil (23) entfernter Ringscheibe (41) an einer stirnseitigen Anlagefläche des Magneten (40) abstützt.

8. Servolenkung nach Anspruch 7,
**dadurch gekennzeichnet,**
**daß** in der der Tellerscheibe (42) zugewandten Stirnseite des Magneten (39) eine zylindrische Ausnehmung (44) enthalten ist, die durch die auf der Anlagefläche des Magneten (39) aufliegende Tellerscheibe (42) verschlossen ist.

9. Servolenkung nach Anspruch 8,
**dadurch gekennzeichnet,**
**daß** die Schraubendruckfeder (43) koaxial zum Stößel (40) in der Ausnehmung (44) untergebracht ist.

10. Servolenkung nach einem der vorhergehenden Ansprüche,
**dadurch gekennzeichnet,**
**daß** das Schließ- oder Drosselorgan (31;41) von der Federanordnung (33;43) mit temperaturabhängiger, bei sinkender Temperatur abnehmender Federkraft, in seine Schließ- bzw. Drossellage gespannt wird.

11. Servolenkung nach einem der vorhergehenden Ansprüche,
**dadurch gekennzeichnet,**
**daß** die Federanordnung als Feder (33;43) aus Formgedächtnis-Legierung ausgebildet ist oder eine derartige Feder (33;43) umfaßt.

12. Servolenkung nach Anspruch 10 oder 11,
**dadurch gekennzeichnet,**
**daß** die Federanordnung (33;43) aus einer Bimetallfeder besteht oder eine derartige Feder umfaßt.

13. Servolenkung nach einem der vorhergehenden Ansprüche,
**dadurch gekennzeichnet,**
**daß** die Dämpferventilanordnungen (15) in Gehäusebohrungen des Servoventiles (9) angeordnet sind.

14. Servolenkung nach einem der vorhergehenden Ansprüche,
**dadurch gekennzeichnet,**
**daß** Sensoren vorgesehen sind, die mit die aktuelle Fahrsituation kennzeichnenden Parametern korrelierte Signale generieren, und
**daß** eine elektrische und/oder elektronische Steuereinrichtung vorgesehen ist, die in Abhängigkeit der Signale der Sensoren den Elektromagneten (32;39) steuert.

## Claims

1. Hydraulic servo-steering device, a servomotor (4) of which, developed as a hydrostatic engine unit or hydraulic displacement unit, also acts as a steering damper, in which damper valve arrangements (15) are provided on hydraulic conduits (10) between the servomotor (4) and a servo-valve (9),
whereby, inside each damper valve arrangement (15), a first space (24'), which communicates with the servo-valve (9), is separated from a second space (24"), which communicates with the servomotor (4),
whereby a first and at least one second flow channel (25, 26) are provided, which each connect the first space (24') to the second space (24"),
whereby a closing or throttling member (31; 41) is provided, which functions together with a flow channel (25, 26) such that the closing or throttling member (31; 41) blocks the at least one first flow channel (25) in the manner of a check valve, in one direction, and, in the other direction, opens and throttles the at least one second flow channel (26),
whereby the closure and throttling member (31; 41) is held under spring loading tension, in a closed or throttling position, by a spring arrangement (33; 43),
**characterized in that**
a magnet (32; 39) is provided which, through electrical switching, acts, against the spring loading, in conjunction with the closing or throttling member (31; 41).

2. Servo-steering in accordance with claim 1,
**characterized in that**
the magnet (32) is circular and is coaxially disposed in relation to a bolt (29) on which a flanged ring (31), functioning, in the manner of a check valve, as a closing or throttling member, is disposed such that it can move, whereby the magnet (32) for displacing the flanged ring (31) acts in conjunction with the latter in checking the return movement of this flanged ring

3. Servo-steering in accordance with claim 2,
**characterized in that**
the flanged ring (31), drawn by the magnet (32), comes to lie against an axial end of the magnet (32) when reaching its position of maximum opening, whereby a closed annular space is developed by means of a magnet (32), a bolt (29) and a flanged ring (31).

4. Servo-steering in accordance with either one of claims 2 or 3,
**characterized in that**
the spring arrangement has a compression spring (33), which is disposed between bolt (29) or magnet (32) and flanged ring (31), and pre-stresses the flanged ring (31) in the reverse direction.

5. Servo-steering in accordance with claim 1,
**characterized in that**
the magnet (39) is circular and coaxially disposed in relation to a support element (23), within the damper valve arrangement (15), containing the channels (25, 26), whereby the magnet (39), by means of an impacting rod (40), functions in conjunction with an annular plate (41) which acts like a check valve and serves as a closing or throttling member, such as to displace the annular plate in a direction opposite to the reverse direction.

6. Servo-steering in accordance with claim 5,
**characterized in that**
the spring arrangement has a compression spring (43), which is disposed between a disc washer (42), applied to an impacting rod (40), and the magnet (39), and the impacting rod (40) produces pre-stressing of the annular plate (41) in its reverse direction.

7. Servo-steering in accordance with claim 6,
**characterized in that**
the impacting rod (40) passes coaxially through the magnet (39) and the support section (23), with play,
**in that** the annular plate (41) is attached to an end of the impacting rod (40) and is supported, in its reverse position, on the support section (23) and
**in that** the disc washer (42) is attached to the other end of the impacting rod (40) and is supported, when the annular plate is at its farthest from the support section (23), on a front face abutment surface of the magnet (40).

8. Servo-steering in accordance with claim 7,
**characterized in that**
there is a cylindrical recess (44), which is closed by the disc washer (42) which lies on the abutment surface of the magnet (39), in the end of the magnet (39) which faces the disc washer (42).

9. Servo-steering in accordance with claim 8,
**characterized in that**
the compression spring (43) is housed, coaxially in relation to the impacting rod (40), in the recess (44).

10. Servo-steering in accordance with any one of the foregoing claims,
**characterized in that**
the closing and throttling member (31; 41) is held under tension in its closing or throttling position by the spring arrangement (33; 43) which shows declines in spring pressure with falling temperature, on a temperaturedependent basis.

11. Servo-steering in accordance with any one of the preceding claims,
**characterized in that**
the spring arrangement is developed from a spring (33; 43) made of a formretaining alloy or includes such a spring (33; 43).

12. Servo-steering in accordance with claim 10 or 11,
**characterized in that**
the spring arrangement (33; 43) is a bimetal spring or includes such a spring.

13. Servo-steering in accordance with any one of the foregoing claims,
**characterized in that**
the damper valve arrangements (15) are disposed in housing borings of the servo-valve (9).

14. Servo-steering in accordance with any one of the foregoing claims,
**characterized in that**
sensors are provided, which generate signals correlated to parameters characterizing the current movement of a vehicle concerned and,
**in that** an electrical and/or electronic control device is provided, which controls the sensors of the electromagnets (32; 39) on the basis of the signals.

## Revendications

1. Servo-direction hydraulique, dont le servomoteur (4), réalisé sous la forme de groupe moteur hydraulique ou de groupe volumétrique hydraulique, agit également comme amortisseur de direction, dans lequel des dispositifs à soupape d'amortissement (15) sont prévus sur les conduites hydrauliques (10), entre le servomoteur (4) et une soupape d'asservissement (9),
à l'intérieur de chaque dispositif de soupape d'amortissement (15), une première chambre (24'), qui communique avec la soupape d'asservissement (9), étant séparée d'une deuxième chambre (24"), mise en communication avec le servomoteur (4),
au moins une première et au moins une deuxième voie d'écoulement (34, 26) étant prévues, reliant chaque fois la première chambre (24') à la deuxième chambre (24"),
un organe de fermeture ou d'étranglement (31; 41) étant prévu, qui coopère avec les voies d'écoulement (25, 26), de manière que l'organe de fermeture ou d'étranglement (31; 41) ferme la au moins une première voie d'écoulement (25), à la façon d'un clapet anti-retour, dans une première direction, et libère le passage, dans une autre direction, et étrangle la au moins une deuxième voie d'écoulement (25),
l'organe de fermeture ou d'étranglement (31; 41) étant sollicité par un dispositif à effet élastique (33; 43), par une force élastique, en une position de fermeture ou d'étranglement,
**caractérisée en ce que**,
il est prévu un aimant (32; 39) qui, de façon susceptible d'être commutée électriquement, coopère, à l'encontre de la force élastique, avec l'organe de fermeture ou d'étranglement (31; 41).

2. Servo-direction selon la revendication 1,
**caractérisée en ce que**,
l'aimant (32) est de configuration annulaire et est disposé coaxialement par rapport à un boulon (29) sur lequel est disposé, en tant qu'organe de fermeture ou d'étranglement, un disque annulaire (31) travaillant à la façon d'un clapet anti-retour, l'aimant (32), prévu pour mouvoir de façon réglée le disque annulaire (31), coopérant avec celui-ci, à l'encontre de la direction de retour d'écoulement.

3. Servo-direction selon la revendication 2,
**caractérisée en ce que**
le disque annulaire (31) attiré par l'aimant (32), lors de l'atteinte d'une position d'ouverture maximale, vient se placer en appui sur une extrémité axiale de l'élément (32) une chambre annulaire, fermée par l'aimant (32), le boulon (29) et le disque annulaire (31), se constituant alors.

4. Servo-direction selon l'une quelconque des revendications 2 ou 3,
**caractérisée en ce que**
le dispositif à effet élastique présente un ressort hélicoïdal de compression (33), disposé entre le boulon (29) ou l'aimant (32) et le disque annulaire (31) et précontraignant le disque annulaire à la direction de l'effet anti-retour.

5. Servo-direction selon la revendication 1,
**caractérisée en ce que**
l'aimant (39) est de forme annulaire et est disposé coaxialement par rapport à une partie support (23) contenant les canaux (25, 26), à l'intérieur du dispositif à soupape d'amortissement (25), l'aimant (39) coopérant, par l'intermédiaire d'un poussoir (40), avec un disque annulaire (41) servant d'organe de fermeture ou d'étranglement, travaillant à la façon d'un clapet anti-retour, pour le mouvoir de façon réglée, à l'encontre de la direction d'effet anti-retour.

6. Servo-direction selon la revendication 5,
**caractérisée en ce que**
le dispositif à effet élastique présente un ressort hélicoïdal de compression (43), disposé entre un disque de plateau monté sur le poussoir (40) et l'aimant (39) et entrainant le poussoir (40) dans la direction d'une précontrainte du disque annulaire (41) dans sa direction d'effet anti-retour.

7. Servo-direction selon la revendication 6,
**caractérisé en ce que**
le poussoir (40) traverse l'aimant (39) et la partie support (23) coaxialement, avec un jeu radial,
**en ce que** le disque annulaire (41) est fixé à une extrémité du poussoir (40) et prend appui à sa position d'effet anti-retour, sur la partie support (23), et
**en ce que** le disque formant plateau (42) est fixé à l'autre extrémité du poussoir (40) et prend appui sur une face d'appui frontale de l'aimant (40) lorsque le disque annulaire (41) est à son éloignement maximal de la partie support (23).

8. Servo-direction selon la revendication 7,
**caractérisée en ce que**,
dans la face frontale, tournée vers le disque formant plateau (42), de l'aimant (39) est ménagé un évidement (44) cylindrique, obturé par le disque formant plateau (42) reposant sur la face d'appui de l'aimant (39).

9. Servo-direction selon la revendication 8,
**caractérisée en ce que**
le ressort hélicoïdal de compression (43) est logé, coaxialement par rapport au poussoir (40), dans l'évidement (44).

10. Servo-direction selon l'une des revendications précédentes,
**caractérisée en ce que**
l'organe de fermeture ou d'étranglement (31; 41) est sollicité par le dispositif à effet élastique (33; 43) à sa position de fermeture ou d'étranglement, par une force élastique, qui est fonction de la température et dont la valeur diminue avec la température.

11. Servo-direction selon l'une quelconque des revendications précédentes,
**caractérisée en ce que**
le dispositif à effet élastique est réalisé sous la forme d'un ressort (33; 43) constitué en un alliage à mémoire de forme ou bien comprend un ressort (33; 43) de ce type.

12. Servo-direction selon la revendication 10 ou 11,
**caractérisée en ce que**
le dispositif à effet élastique (33; 43) est constitué d'un ressort bimétallique ou bien comprend un tel ressort.

13. Servo-direction selon l'une des revendications précédentes,
**caractérisée en ce que**
les dispositifs à soupape d'amortissement (15) sont disposés dans des perçages du boîtier de la soupape d'asservissement (9).

14. Servo-direction selon l'une quelconque des revendications précédentes,
**caractérisée en ce que**
sont prévus des capteurs qui génèrent des signaux en corrélation avec les paramètres caractérisant la situation actuelle de roulage, et
**en ce qu'**est prévu un dispositif de commande électrique et/ou électronique, qui commande les électroaimants (32; 39) en fonction des signaux venant des capteurs.
